# EUROPEAN PATENT APPLICATION

(11) **EP 3 441 562 A1**
(43) Date of publication of application: **13.02.2019**
(21) Application number: 18183829.3
(22) Date of filing: 17.07.2018
(51) Int. Cl.: F01D 5/02, F01D 5/06, F04D 29/26

(54) **FAN DISC APPARATUS**

(30) Priority: 09.08.2017 GB 201712737
(71) Applicant: Rolls-Royce plc, London SW1E 6AT (GB)
(72) Inventor: Benson, Christopher, Derby, Derbyshire DE24 8BJ (GB); Evans, Dale, Derby, Derbyshire DE24 8BJ (GB)
(74) Representative: Rolls-Royce plc

(57) **Abstract**

A fan disc apparatus for a gas turbine engine comprising: a fan disc; a first drive arm for connecting the fan disc to a fan drive shaft of the gas turbine engine; and a second drive arm for connecting the fan disc to the fan drive shaft.

## Description

The present disclosure concerns a fan disc apparatus and, in particular, drive arms for fan discs.

In a gas turbine engine, the fan typically comprises a fan disc and a plurality of fan blades extending generally radially from the fan disc. The fan disc is secured to the fan drive shaft via a drive arm, which extends generally radially inwards from the fan disc for connection to the fan drive shaft.

However, improvements are desirable in the area of fan disc drive arms to increase or optimise fan system performance with respect to other constraints.

According to a first aspect there is provided a fan disc apparatus for a gas turbine engine comprising: a fan disc; a first drive arm for connecting the fan disc to a fan drive shaft of the gas turbine engine; and a second drive arm for connecting the fan disc to the fan drive shaft.

By providing a second drive arm to support the fan disc, the fan disc may be less susceptible to flexing and dilation of the fan disc at high rotation speeds as the fan disc may be restrained radially more evenly along its axial length. Furthermore, by providing a second drive arm rather than increasing the size of a single drive arm, less weight can be added to the system for an equivalent structural benefit and the size of each arm may be reduced. Furthermore, two spaced-apart drive arms rather than one drive arm may lead to an increased second moment of area, thereby improving the stiffness of the system. Second drive arms may reduce or eliminate the requirement for disc-rim balancing cobs or thicker disc rims (all of which can add significant weight) and may allow shaft bearings to be placed more advantageously closer to the fan.

Additionally, the first and second drive arms permit more design freedom to balance the load/stress distributions of the fan blade & fan disc system e.g. low cycle fatigue & high cycle fatigue stresses, within the existing system constraints. For example, a second drive arm may not require changes to the rest of the engine architecture, cycle or to the fan system diameter or length.

Furthermore, improved balancing of the fan disc and blade stresses achievable with two drive arms permits more design freedom for the fan blades of the fan to improve aero and aero-mechanical performance (e.g. efficiency, flutter/stall), which may also permit improved blade vibration characteristics and the improvement of blade mode shapes and frequencies.

A drive arm may be any element configured to extend at least partially in a radial direction between the fan drive shaft and the fan disc to thereby connect the fan disc to the fan drive shaft. Drive arms may also extend in the axial direction in addition to a radial direction within the engine. For example, an acute angle may be formed between the drive arm and a plane perpendicular to the drive shaft axis. Drive arms may extend forward in the engine (i.e. extend axially forward at an increasing radius from the drive shaft) such that the fan disc arranged is generally axially forward the drive arm's interface with the drive shaft, or may extend rearward in the engine (i.e. extend axially backward at an increasing radius from the drive shaft) such that the fan disc is generally axially rearward of the drive arm's interface with the drive shaft. Drive arms may extend substantially mutually parallel.

The fan disc may comprise a plurality of radially extending fan blades or may be configured to receive and retain a plurality of radially extending fan blades.

The first and/or second drive arm may, or may not, be hoop-continuous. If the arms are not hoop continuous, then cost and weight savings may be achieved. Furthermore, if the first or second drive arm is not hoop-continuous, then the space between the drive arms may be accessible, which may improve or ease manufacture, assembly, and maintenance. For example, one or both of the drive arms may be segmented or castellated.

The second drive arm may comprise a first arm portion formed integrally with the fan disc, and a second arm portion formed separately to the fan disc and connectable to the first arm portion. In other examples, the first drive arm portion may be a separate part which is fixed to the fan disc, such as with bolts or other removable fixings. It may be structurally complex to manufacture a fan disc integrally with two drive arms, so if one of the drive arms is formed separately to the fan disc, then the fan disc apparatus may be assembled on the fan drive shaft sequentially. For example, the second drive arm may be fixed to the drive shaft, then the first drive arm (and the fan disc) may be secured to the drive shaft. Accordingly, the assembly of the fan disc and the gas turbine engine generally may be achieved more easily. One or both of the first or second drive arm portions may be formed of different material or materials to the fan disc, which may provide structural or weight advantages over a completely integrally formed drive arm.

The first arm portion may comprise a first hook portion and the second arm portion comprises a corresponding second hook portion for connection with the first hook portion of the first arm portion. The first hook portion may face axially rearward and the second hook portion may face axially forward. The first and second hook portions may be arranged such that radial load is transferred between the first and second drive arm portions. Contact faces of the first and second hook portions may be substantially parallel and extend axially within the engine. Accordingly, one or other of the fan disc (having the first drive arm portion) or the second drive arm portion can be arranged on the drive shaft first, then the other can be slidably received by the already-located drive arm portion. Thus, the first and second drive arm portions may be connected so as to transfer radial forces therebetween without the necessity for fixed connection between the two, which may be difficult to achieve as the engine is being assembled.

The second arm portion may be configured to be secured to the fan drive shaft independently of the fan disc and the first drive arm. Each of the first and second drive arms, and in particular the second drive arm portion, may be axially fixable to the drive shaft separately, for example with one or more lock nuts, bolts, splines, and/or curvic connections. Accordingly, a 'two-stage' assembly of the fan disc on the fan drive shaft may be achievable to improve ease of assembly without reducing performance.

The first arm portion may have a radial span shorter than a radial span of the second arm portion or may have a radial span which is larger than a radial span of the second arm portion. In some examples, the second, separately formed, drive arm portion may extend across a majority of the radial distance between the drive shaft and the fan disc. In other examples, the first drive arm portion integral to the fan disc may extend across a majority of the radial distance between the drive shaft and the fan disc.

The first drive arm may be formed integrally to the fan disc. In other examples, the first drive arm may be formed separately to the fan disc and may be securable to the fan disc. By integrally formed, it should be understood that the first drive arm is permanently attached to the fan disc, for example by being cast or machined as a single continuous component, being welded to the fan disc, or fixed to the fan disc by other means which may not be released without damaging the fan disc or the first drive arm.

The first and second drive arms may each be configured to interface with the fan drive shaft. The first and second drive arms may interface or attach to the fan drive shaft separately.

The fan disc may comprise an axially-extending disc hoop and the first and second drive arms may extend radially inwards of the disc hoop. The first and second drive arms may be axially spaced apart on a radially inner surface of the disc hoop.

The fan disc apparatus may further comprise a hub sleeve for connection with the fan drive shaft. The first and second drive arms may extend between the fan disc and the hub sleeve. The hub sleeve may comprise splines for connection to the fan drive shaft. The hub sleeve may extend axially by a distance greater than an axial distance between the first and second drive arms. The first drive arm may be formed integrally with the hub sleeve.

The second arm portion of the second drive arm may be formed separately to the sleeve and may be configured to connect the first arm portion of the second drive arm to the hub sleeve. For example, the second drive arm portion may comprise a supplementary sleeve for connection to the hub sleeve. The supplementary sleeve may comprise a splined connection with the hub sleeve. The supplementary sleeve may be secured on the hub sleeve with temporary fixing means, such as a lock nut. Accordingly, the fan disc apparatus including a fan disc, first and second drive arms, and the hub sleeve may be assembled outside of the engine, then fitted to the engine as a single component, rather than the separate components being secured to the fan drive shaft in stages.

The first and second arm portions may be configured to be connected by a releasable fastener. For example, the first and second arm portions may be connectable using bolts. The main axis of extension of the bolts may be parallel to the fan drive shaft axis, or may be perpendicular to a main extension direction of the second drive arm. The second arm portion of the second drive arm may comprise one or more splines for preventing rotation of the second arm portion relative to the first arm portion and the fan disc.

The second drive arm may comprise a radially inner fixing point, a radially outer fixing point, and a drive arm plate configured for attachment between the inner and outer fixing points. Accordingly, a fan disc apparatus having two drive arms can be manufactured without the difficulty of creating a closed cavity between the two drive arms. The drive arm plate may be attachable to each of the inner and outer fixing points using one or more removable fasteners, such as bolts or rivets. The drive arm plate may be attachable to each of the inner and outer fixing points with a welded connection.

The second drive arm or, in particular, the drive arm plate, may be arranged to extend in a substantially radial direction only (i.e. substantially perpendicular to the fan drive shaft axis). Accordingly, shear forces may be reduced or eliminated in the second drive arm. Furthermore, if one of the first and second drive arms is forward or rearward extending, while the other is substantially radially extending, then the two drive arms may form a triangular arrangement in cross-section, which may improve stiffness and load-carrying.

One or both of the inner and outer fixing points may comprise a radially extending inner and outer flange, respectively. The inner flange may be integral to a hub sleeve for connection to the fan drive shaft. The outer flange may be integral to the fan disc.

The drive arm plate may comprise a fan blade securing portion for securing one or more fan blades to the fan disc when the drive arm plate is attached to the outer fixing point. The fan blade securing portion may be arranged such that, in use, the fan blade securing portion prevents axial movement of the fan blades relative to the fan disc. The fan blade securing portion may be arranged on an axial end face of the fan disc in use.

The fan disc may be formed of first and second fan disc portions. The first fan disc portion may be formed integrally with the first drive arm and the second fan disc portion may be formed integrally with the second drive arm. The first and second fan disc portions may be connectable in axial series to form the fan disc. The fan disc portions may be connected by temporary or removable means, such as bolting, or by permanent means, such as welding or friction welding. In some examples, the first and second fan disc portions may be formed of different materials. Accordingly, each of the first and second fan disc portions can be more effectively designed for its particular requirements.

The first drive arm and first fan disc portion may be formed integrally with a first hub sleeve for connection to the fan drive shaft.

The second drive arm and second fan disc portion may be formed integrally with a second hub sleeve for connection to the first hub sleeve or the fan drive shaft.

In use, the first drive arm may be arranged axially forward of the second drive arm or axially rearward of the second drive arm. In examples where the second drive arm is arranged axially forward of the first drive arm in use, then it may be easier to access the second drive arm for manufacture, assembly, and maintenance, for example by simply removing a nose cone of the fan.

The first and second drive arms are rearward-facing drive arms or forward-facing drive arms.

According to a further aspect, there is provided a gas turbine engine comprising a fan drive shaft and a fan disc apparatus as hereinbefore described.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the
Figures, in which:
**Figure 1** is a sectional side view of a gas turbine engine;
**Figure 2a** is a sectional side view of a first example of a fan disc apparatus;
**Figure 2b** is a sectional side view of an alternative arrangement of the fan disc apparatus of Figure 2a;
**Figure 3a** is a sectional side view of a second example of a fan disc apparatus;
**Figure 3b** is a sectional side view of an alternative arrangement of the fan disc apparatus of Figure 3a;
**Figure 4a** is a sectional side view of a third example of a fan disc apparatus;
**Figure 4b** is a sectional side view of an alternative arrangement of the fan disc apparatus of Figure 4a;
**Figure 4c** is a sectional side view of a further alternative arrangement of the fan disc apparatus of Figure 4a and 4b;
**Figure 5** is a sectional side view of a fourth example of a fan disc apparatus;
**Figure 6** is a sectional side view of a fifth example of a fan disc apparatus; and
**Figure 7** is a sectional side view of a sixth example of a fan disc apparatus.

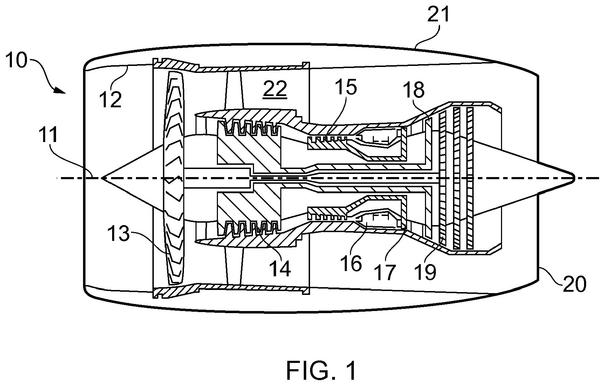

With reference to **Figure 1****,** a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

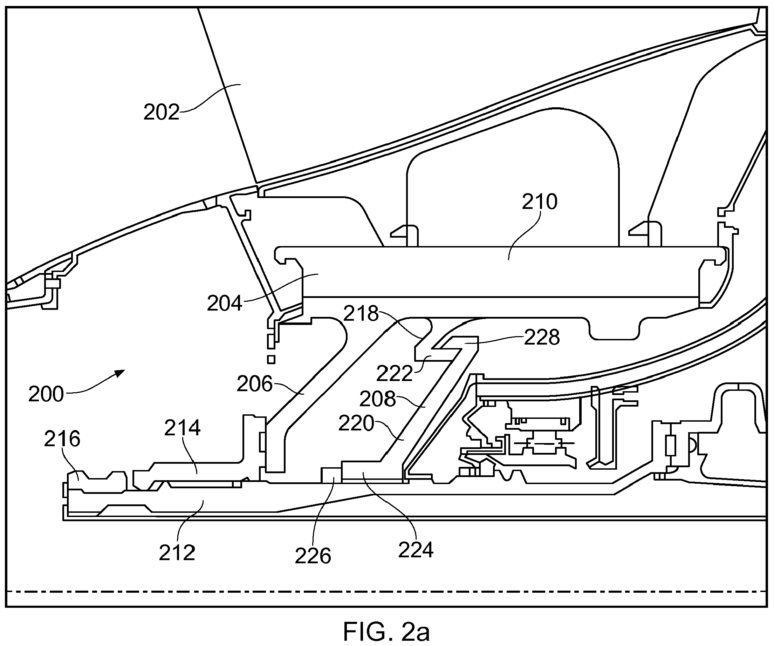

**Figure 2a** is an enlarged cross-sectional view of the fan 13 showing a fan disc apparatus 200 and fan blades 202.

The fan disc apparatus 200 comprises a fan disc 204, a first drive arm 206, and a second drive arm 208.

The fan disc 204 comprises a hoop 210. The radially outer surface of the fan disc hoop 210 comprises a plurality of recesses for receiving the roots of the fan blades 202 (not shown).

The fan 13 is rotatable within the engine 10. In order to achieve this rotation, the fan disc 204 is mounted to a fan drive shaft 212 which extends axially within the engine and is connected to the low pressure turbine 19. As the low pressure turbine is driven by the exhaust, thereby rotating the fan drive shaft 212 and, consequently, the fan 13.

The fan 13 is attached to the drive shaft 212 via the first 206 and second 208 drive arms. As shown in Figure 2a, the first drive arm 206 is formed integrally with the fan disc 204. The first drive arm 206 extends radially inward and axially forward from the radially inner surface of the fan disc hoop 210. The first drive arm 206 is cast or machined as a single integral piece with the fan disc or, in some other examples, could be a separate part attachable to the fan disc.

At a radially inner portion of the first drive arm 206, it is connected to a hub sleeve 214 which is arranged on the drive shaft 212. In some examples, the hub sleeve 214 may also be integrally formed with the fan disc 204 and the first drive arm 206. The hub sleeve 214 comprises splines on a radially inner surface thereof to prevent rotation of the fan disc 204 with respect to the drive shaft 212. A locking nut or cap 216 is provided adjacent the hub sleeve 214 to prevent axial movement of the hub sleeve 214 relative to the drive shaft 212. As will be shown in other examples, the drive arms may in other examples extend axially rearward from the fan disc 204. In such cases, the first drive arm 206 may be secured to the drive shaft using a curvic or bolted coupling or similar.

As shown, the fan disc apparatus 200 also comprises a second drive arm 208. Like the first drive arm 206, the second drive arm 208 extends radially inward and axially forward from the fan disc 204. The second drive arm 208 is arranged axially rearward of the first drive arm 206.

Unlike the first drive arm 206, the second drive arm 208 is formed of a first arm portion 218 and a second arm portion 220.

The first arm portion 218, like the first drive arm 206, is formed integrally with the fan disc 204. The first arm portion 218 extends radially inward by a relatively short distance and comprises a first hook portion 222 at a radially inner end thereof. The first hook portion 222 comprises an annular flange which extends rearward parallel to the axial direction 11 of the engine 10.

The second arm portion 220 comprises a secondary hub sleeve 224 for engagement with the drive shaft 212. The secondary hub sleeve comprises splines which prevent rotational movement between the second arm portion 220 and the shaft 212. A locking nut 226 secures the second arm portion axially on the drive shaft 212. The second arm portion extends radially outward over the majority of the radial distance between the drive shaft 212 and the fan disc 204. At a radially outer end, the second arm portion 220 comprises a second hook portion 228. The second hook portion 228 comprises an annular flange which extends forward parallel to the axial direction 11 of the engine 10.

In use the radially outer surface of the first hook portion 222 engages with the radially inner surface of the second hook portion 228. As the fan disc 204 rotates, it will tend to dilate, and the first arm portion 218 will be pulled away from the drive shaft 212. However, the engagement of the hook portions 222,228 will prevent the first arm portion 218 from moving radially outward as it is retained by the second arm portion 220. Accordingly, the second drive arm 208 provides a stiffer fan disc apparatus which is less prone to dilation and vibration. Accordingly, balancing of disc and blade stresses under vibrational loads may be improved.

An advantage of connecting the first and second arm portions 218,220 using the hook portions 222, 228 will be apparent when considering the assembly of the fan disc apparatus 200 on the drive shaft 212. Firstly, the drive shaft 212 may be exposed at an axially foremost end. The secondary hub sleeve 224 of the second arm portion 220 can be mounted on the drive shaft 212 by sliding it axially along the shaft 212. The second arm portion 220 is then secured with the locking nut 226. Subsequently, the hub sleeve 214 (with disc 204 attached thereto via the first drive arm 206) can be mounted on the shaft 212 axially. As the hub sleeve 214 is moved axially rearward, the forward-facing hook portion 228 of the second arm portion 220 will naturally engage with the rearward facing hook portion 222 of the first arm portion 218. Once the first and second arm portions 218,220 are fully engaged and the fan disc 204 is correctly located, the locking nut 216 can be attached to secure the fan disc apparatus 200 on the drive shaft 212, which may be a blind assembly within the engine.

Accordingly, the arrangement of Figure 2a provides a secondary drive arm 208 which resists radial dilation of the fan disc 204 without requiring complex manufacturing or assembly techniques, or large, heavy cobs on the fan disc.

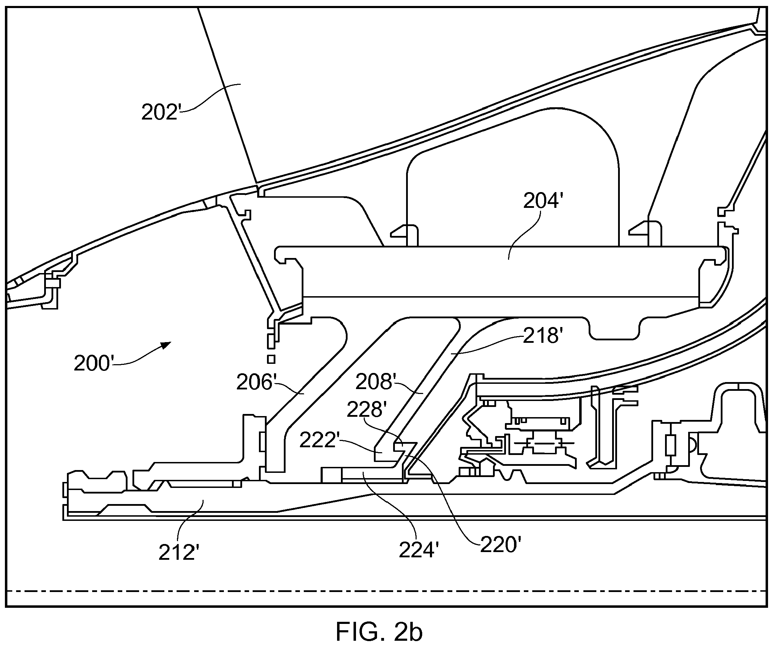

**Figure 2b** shows an alternative arrangement of a fan disc apparatus 200' similar to that of Figure 2a. Like features with the apparatus 200 are denoted by a "'". In the apparatus 200', the second drive arm 208' is arranged differently. In this example, the first arm portion 218' extends across the majority of the radial distance between the fan disc 204' and the drive shaft 212', while the second arm portion 220' extends radially outward from the secondary hub sleeve 224' by a relatively short distance. The hook portions 222', 228' nevertheless operate in the same manner as described in relation to the fan disc apparatus 200 of Figure 2a.

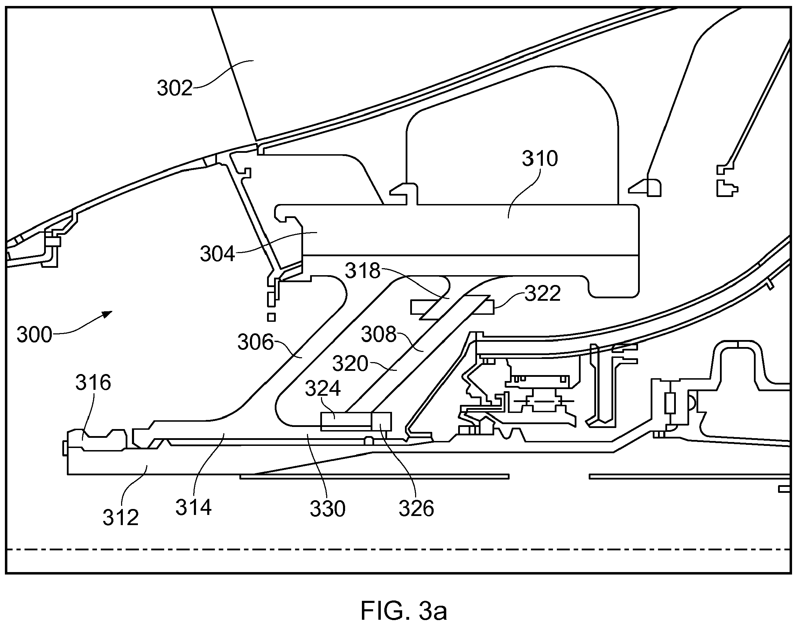

**Figure 3a** shows an alternative example of a fan disc apparatus 300. Like features between the apparatus 200 of Figure 2a and the apparatus 300 will be indicated by reference numerals differing by 100.

In the fan disc apparatus 300, the second drive arm 208 comprises first and second drive arm portions 318, 320. However, in this instance, the first and second drive arm portions 318, 320 are connected with a bolted connection 322.

In fan disc apparatus 300, the first drive arm 306 is formed integrally with the hub sleeve 314. The hub sleeve 314 extends rearward of the first drive arm 306 to provide a sleeve mounting portion 330. The secondary hub sleeve 324 of the second arm portion 320 is configured to be received concentrically on the sleeve mounting portion 330. The second arm portion 320 is then secured on the hub sleeve 314 using a locking nut 326. After the second arm portion 320 is secured on the hub sleeve 314, the bolted connection 322 to the first arm portion 318 can be secured while the fan disc apparatus 300 is outside of the engine 10.

Once the second arm portion 320 is secured to both the hub sleeve 314 and the first arm portion 318, the fan disc apparatus 300 comprising both first and second arms 306, 308 can be mounted on the drive shaft 312 and secured using the locking nut 316.

Accordingly, the entire fan disc apparatus 300 can be assembled outside of the engine 10, and simply fitted to the drive shaft 312 as a single piece.

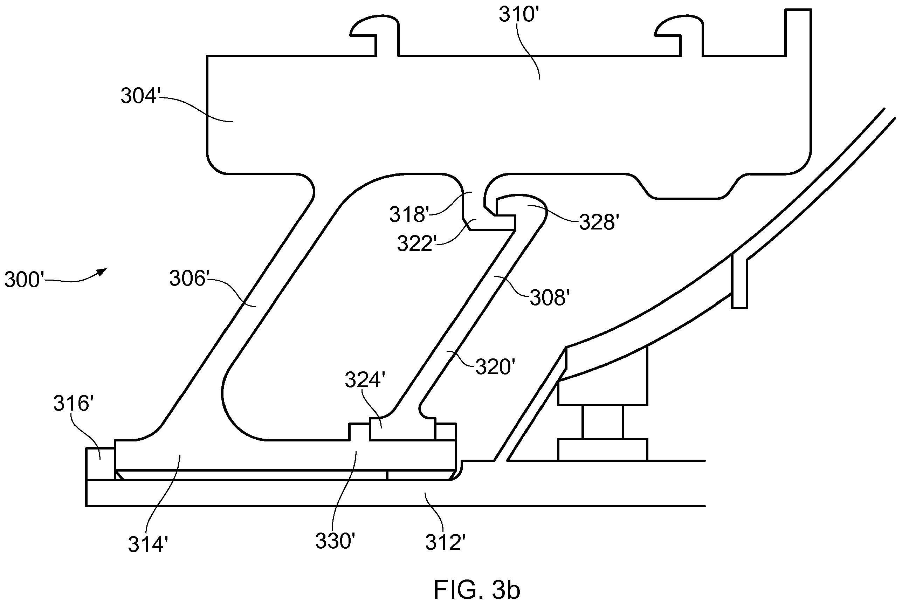

**Figure 3b** illustrates an alternative apparatus 300' similar to the fan disc apparatus 300 of Figure 3a. Like features between the apparatus 300' and 300 are denoted by a"'".

In the apparatus 300', the second arm portion 320' is mounted on the hub sleeve 314', but the connection between the second arm portion 320' and the first arm portion 318' is achieved using a first hook portion 322' of the first arm portion and a second hook portion 328' of the second arm portion 320' as described in relation to Figures 2a and 2b above. As a bolted connection is not required, the assembly of the fan disc apparatus is further simplified.

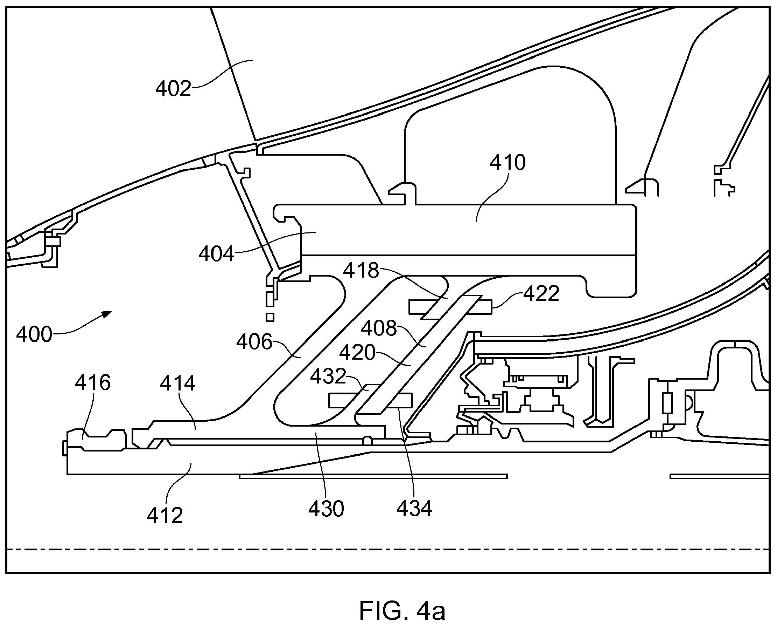

**Figure 4a** shows a further example of a fan disc apparatus 400. Like features between the earlier described fan disc apparatuses 200, 300 and the fan disc apparatus 400 are indicated by reference numerals separated by 200 and 100 respectively.

In the apparatus 400, the second drive arm 408 comprises a radially inner fixing point 432, a radially outer fixing point 418, and a drive arm plate 420 configured for attachment between the inner and outer fixing points.

The radially outer fixing point 418 is a radially extending flange which, like the first arm portions 218, 318, extends radially inward from the fan disc 404. The radially inner fixing point 432 is also a radially extending flange, which extends radially outwards from a rearward extension 430 of the hub sleeve 414. The inner and outer fixing points 432, 418 form the radially inner and radially outer ends of the second drive arm and are integrally formed with the hub sleeve 414 and the fan disc 404 respectively.

The drive arm plate 420 is a radially extending plate ring which extends between the inner and outer fixing points 432, 418 to form the main span of the second drive arm 408. The drive arm plate comprises a plurality of through-holes formed about its circumference adjacent the inner fixing point 432 and adjacent the outer fixing point 418. The fixing points 418, 432 comprise corresponding through holes.

Prior to installation of the fan disc assembly 400 on the drive shaft 412, the drive arm plate 420 is secured to the inner and outer fixing points using bolted connections 422 and 434 which pass through the through holes in the drive arm plate 420 and the fixing points 418, 432. Accordingly, the fixing points 418, 432 and the drive arm plate 420 in combination form the second drive arm 408. It should be understood that other fasteners than bolts could be used to connect the drive arm plate 420, such as rivets.

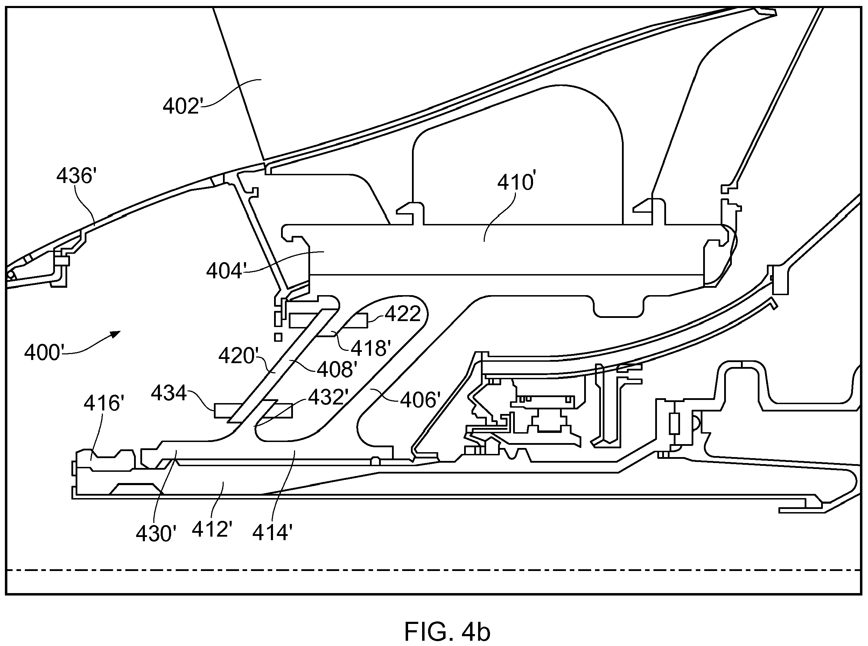

**Figure 4b** shows an alternative arrangement of a fan disc assembly 400'. Like features between apparatus 400' and apparatus 400 of Figure 4a are denoted by a "'". In the arrangement of Figure 4b, the second drive arm 408' comprises fixing points 418', 432' of a similar type to those described in relation to Figure 4a above. However, in the alternative arrangement of Figure 4b, the first drive arm 406' is now arranged axially rearward of the second drive arm 408'.

In order to achieve this, the radially outer fixing point 418' is located axially forward of the first drive arm 406' on the radially inner surface of the fan disc 404'. Furthermore, the hub sleeve 414' comprises an extension 430' which extends axially forward of the first drive arm's 406 interface with the hub sleeve 414'. The drive arm plate 420' is then arranged in contact with the axially forward faces of the fixing points 418', 432' and bolted in place. In this arrangement, the second drive arm 408' may be more easily accessible when the fan disc apparatus 400' is secured to the drive shaft 412', for example by simply removing the nose cone 436'. Thus, it should be understood that the provision of a fan disc apparatus in which the second drive arm is arranged axially forward of the first drive arm may enable easier assembly, repair, and maintenance of the apparatus.

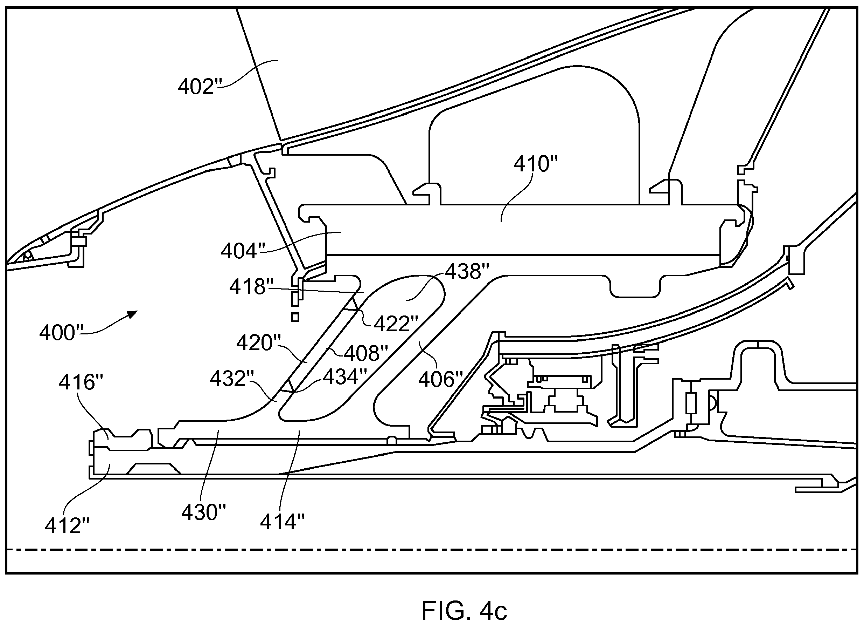

A yet further arrangement of a fan disc assembly 400" is shown in **Figure 4c****.** Like features with apparatus 400' are denoted by an additional " ' ".

Like apparatus 400' of Figure 4b, the fan disc apparatus 400" has the second drive arm 408" arranged axially forward of the first drive arm 406". However, in this arrangement, the drive arm plate 420" is welded to the radially inner and outer fixing points 432" and 418" with welds 434" and 422".

It will be understood that, as the enclosed chamber 438" between the first and second drive arms 406", 408" may not be accessible after the welding of the drive arm plate 420", extreme care must be taken to avoid weld deformation or splatter within the chamber, which could unbalance the fan disc apparatus 400". A welded drive arm plate 420" may increase the strength and torque carrying capability of the second drive arm 408" and reduce stress concentrations compared to bolted connections.

It should be understood that a welded drive arm plate could also be applied to arrangements in which the second drive arm is arranged axially rearward of the first drive arm, as the welding can be performed before the fan disc apparatus is arranged on the fan drive shaft.

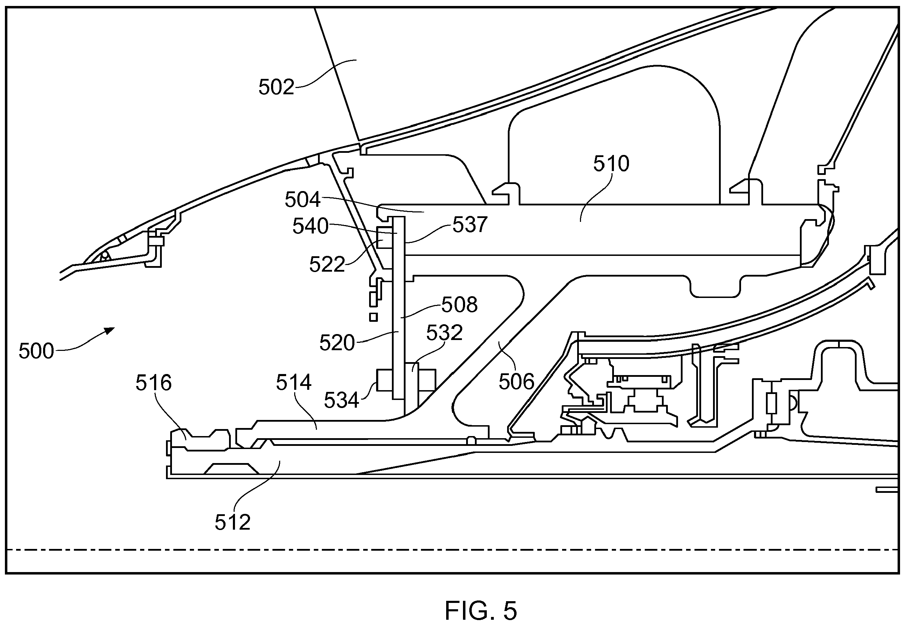

**Figure 5** shows a further arrangement of a fan disc apparatus 500. Like features with the apparatus 200 are denoted by reference numerals differing by 300.

In the fan disc apparatus 500, the second drive arm 508 is arranged axially forward of the first drive arm 506.

A radially inner fixing point or flange 532 is provided on the hub sleeve 514 forward of the first drive arm 506. In this case, the fixing flange 532 extends only in the direction in a plane perpendicular to the drive shaft axis (and more generally the engine axis).

As will be understood the fan blades 502 may be located in the fan disc 504 by sliding a fan root (not shown) axially into corresponding axial channels formed in the fan disc 504. In this case, the fan blade roots may be inserted into the channels from an axial front face 537 of the fan disc 504 and slid axially rearward such that they are received completely within the fan disc 504. Of course, in order to retain the fan blades 502 in the fan disc 504, they must be prevented from moving axially forward back out of the channels in the fan disc 504.

In the apparatus 504, the drive arm plate 520 performs a dual function of retaining the fan blades 502 and forming part of the second drive arm 508. In this case, the drive arm plate 520, like the flange 532, extends purely in a radial direction in a plane perpendicular to the engine axis. At its radially inner end the drive arm plate 520 is bolted to the inner flange 532 in the same manner as the drive arm plates 420, 420' in Figures 4a and 4b. However, unlike the apparatuses 400, 400', no radially outer fixing flange is provided.

The drive arm plate extends radially such that, when secured to the inner flange 532, a radially outer fan blade securing portion 540 of the drive arm plate 520 extends at least partially across the front disc face 537. Bolts 522 secure the plate 520 to the fan disc 504. The fan blade securing portion 540 of the drive arm plate occludes at least part of the open ends of the channels in which the fan blades 502 are received, thereby preventing axial movement of the fan blades out of the channels in the forward axial direction and retaining the fan blades 502 in the fan disc 504.

It should be understood that the drive arm plate 520 may, in other examples, not extend purely radially, and could also extend in an axial direction forward or rearward like the second drive arms 208, 308 described above. Furthermore, the second drive arm 508 could also be arranged rearward of the first drive arm 506. In such a case, it may be possible to arrange the fan blade retaining portion 540 such that it prevents axial movement of the fan blades 502 rearward.

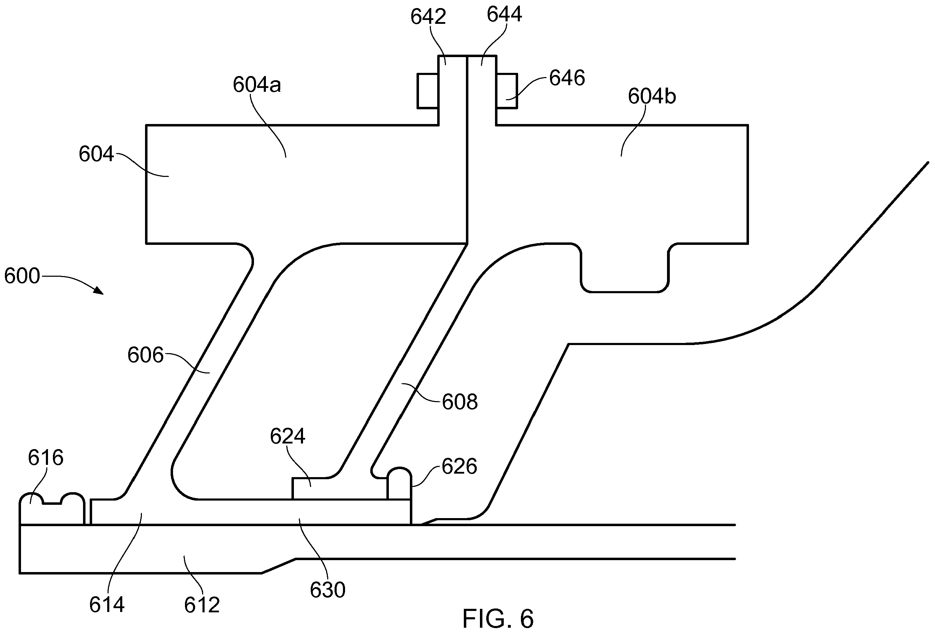

In **Figure 6****,** a yet further example of a fan disc arrangement 600 is shown.

In the fan disc apparatus 600, the fan disc 604 is formed of first fan disc portion 604a and second fan disc portion 604b. Each of the first and second fan disc portions 604a, b are formed integrally with the first drive arm 606 and the second drive arm 608 respectively. In each case, the drive arm extends radially inwards in the same manner as for apparatuses 200, 300.

The fan disc portions 604a and 604b are separate annular hoops which, when arranged axially, can be connected to form the complete fan disc 604. To this end, the first fan disc portion 604a comprises a connecting flange 642 at a radially outer, axially rearward location, and the second fan disc portion comprises a corresponding connecting flange 644 at a radially outer, axially forward location. Accordingly, when the rear axial face of the first fan disc portion 604a is abutted against the front axial face of the second fan disc portion, the connecting flanges 642,644 are in abutment and the two fan disc portions 604a, b can be secured together with a plurality of fixings 646, such as bolts, or may be fixed with a more permanent method, such as welding or friction welding.

Like the apparatus 300 of Figure 3a, the first drive arm 606 has a hub sleeve 614 formed at a radially inner end thereof. The hub sleeve 614 extends rearward of the first drive arm 606 to provide a sleeve mounting portion 630.

The second drive are 608 has a secondary hub sleeve 624 formed at a radially inner end thereof. The secondary hub sleeve 624 has an inner diameter substantially equal to an outer diameter of the sleeve mounting portion 630 and is configured to be received concentrically on the sleeve mounting portion 630.

When the secondary hub sleeve 624 is arranged concentrically on the sleeve mounting portion 630 and moved axially rearward relative to the hub sleeve 614, the first and second fan disc portions 604a,b are brought into abutment as described above, and can be secured together to form the fan disc 604 and, broadly, the fan disc apparatus 600. The secondary hub sleeve 624 can also then secured on the hub sleeve 614 using a locking nut 626.

Once the fan disc portions 604a, b and the hub sleeves 614,624 have been secured together, the fan disc apparatus 600 can be mounted on the drive shaft as a single part.

In other examples, the secondary hub sleeve may not be mounted onto the hub sleeve, and may mount directly onto the drive shaft 614.

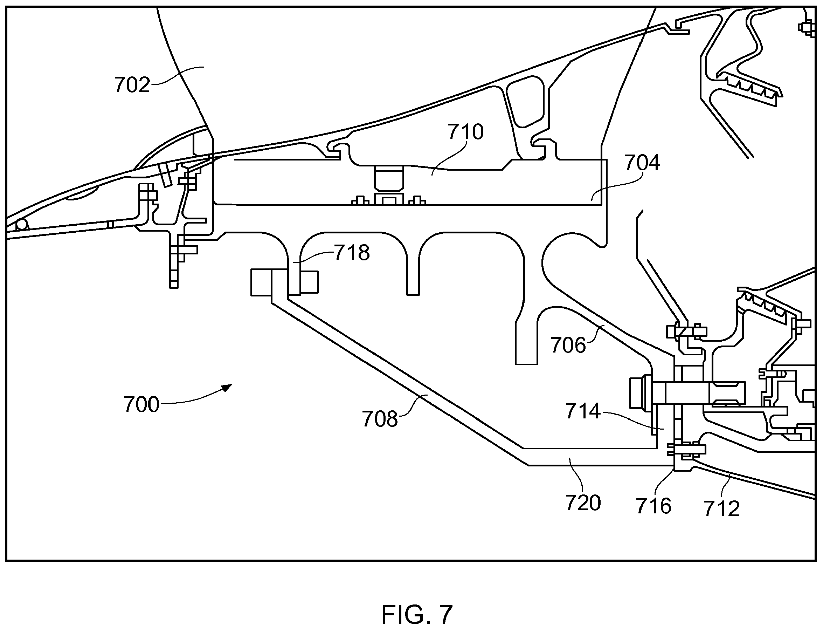

For illustrative purposes, **Figure 7** shows a fan disc apparatus 700 in which the first and second drive arms 706,708 extend axially rearward from the fan disc 704. Like features with the apparatus 300 are separated with reference numerals differing by 400.

In this example, the first and second drive arms 706, 708 are each connected to an annular radially extending plate 714 which is secured to a front axial face of the drive shaft 712 with a curvic coupling 716 or similar. The first drive arm 706 is formed integrally with the fan disc 704 and the plate 714. The second arm portion 720 of the second drive arm 708 could instead be formed integrally with the plate 714.

The fan disc 704 comprises a first arm portion 718 of a similar type to the first arm portion 318 of apparatus 300 in Figure 3a. The second arm portion 720 can be coupled to the first arm portion with a bolted coupling. In other examples, a hook coupling of the type shown in Figures 2a, b may be used.

Accordingly, it should be understood that the examples of Figures 2, 3, 4, 5, and 6 could be equally applied to a fan disc apparatus having rearward-facing drive arms like those shown in Figure 7.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A fan disc apparatus (200, 200', 300, 300', 400, 400', 400", 500, 600, 700) for a gas turbine engine (10) comprising:
- a fan disc (204, 204', 304, 304', 404, 404', 404", 504, 604, 704);
- a first drive arm (206, 206', 306, 306', 406, 406', 406", 506, 606, 706) for connecting the fan disc to a fan drive shaft (212, 212', 312, 312', 412, 412', 412", 512, 612, 712) of the gas turbine engine; and
- a second drive arm (208, 208', 308, 308', 408, 408', 408", 508, 608, 708) for connecting the fan disc to the fan drive shaft.

2. A fan disc apparatus as claimed in claim 1, wherein the second drive arm (208, 208', 308, 308,' 708) comprises a first arm portion (218, 218', 318, 318', 718) formed integrally with the fan disc (204, 204', 304, 304', 704), and a second arm portion (220, 220', 320, 320', 720) formed separately to the fan disc and connectable to the first arm portion.

3. A fan disc apparatus as claimed in claim 2, wherein the first arm portion (218, 218', 318') comprises a first hook portion (222, 222', 322') and the second arm portion (220, 220', 320') comprises a corresponding second hook portion (228, 228', 328') for connection with the first hook portion of the first arm portion.

4. A fan disc apparatus as claimed in any one of claims 2-3, wherein the first arm portion (218, 318, 318', 718) has a radial span shorter than a radial span of the second arm portion (220, 320, 320', 720), or wherein the first arm portion (218') has a radial span which is larger than a radial span of the second arm portion (220').

5. A fan disc apparatus as claimed in any preceding claim, wherein the fan disc comprises an axially-extending disc hoop (210, 310, 310', 410, 410', 410", 510, 604a, 604b, 710) and the first (206, 206', 306, 306', 406, 406', 406", 506, 606, 706) and second (208, 208', 308, 308', 408, 408', 408", 508, 608, 708) drive arms extend radially inwards of the disc hoop, and wherein the first (206, 206', 306, 306', 406, 406', 406", 506, 606, 706) and second (208, 208', 308, 308', 408, 408', 408", 508, 608, 708) drive arms are axially spaced apart on a radially inner surface of the disc hoop (210, 310, 310', 410, 410', 410", 510, 604a, 604b, 710).

6. A fan disc apparatus as claimed in any preceding claim, wherein the fan disc apparatus further comprises a hub sleeve (414; 414', 414", 514) for connection with the fan drive shaft (412, 412', 412", 512), wherein the first (406, 406', 406", 506, 606) and second (408, 408', 408", 508) drive arms extend between the fan disc and the hub sleeve.

7. A fan disc apparatus as claimed in claim 6, wherein the first drive arm (306, 306', 406, 406', 406", 506, 606) is formed integrally with the hub sleeve (314, 314', 414; 414', 414", 514, 614) and/or wherein the second arm portion (320, 320') of the second drive arm (308, 308') is formed separately to the hub sleeve (314, 324') and is configured to connect the first arm portion (318, 318') to the hub sleeve (.

8. A fan disc apparatus as claimed in any of claims 2-7, wherein the first (318) and second (320) arm portions are configured to be connected by a releasable fastener (322).

9. A fan disc apparatus as claimed in any of claims 2-8, wherein the second arm portion (220) of the second drive arm (208) comprises one or more splines for preventing rotation of the second arm portion (220) relative to the first arm portion (218) and the fan disc (204).

10. A fan disc apparatus as claimed in claim 1, wherein the second drive arm comprises a radially inner fixing point (432, 432', 432"), a radially outer fixing point (418, 418', 418"), and a drive arm plate (420, 420', 420") configured for attachment between the inner and outer fixing points, and wherein the drive arm plate (420, 420') is attachable to each of the inner (432, 432') and outer (418, 418') fixing points using one or more removable fasteners (422, 434) or the drive arm plate (420") is attachable to each of the inner (432") and outer (418") fixing points with a welded connection.

11. A fan disc apparatus as claimed in any of claims 10, wherein one or both of the inner (432, 432') and outer (418, 418') fixing points comprises a radially extending inner and outer flange, respectively, and wherein the inner flange (432, 432') is integral to a hub sleeve (414, 414') for connection to the fan drive shaft (412, 412') and/or wherein the outer flange (418, 418') is integral to the fan disc (404, 404').

12. A fan disc apparatus as claimed in any of claims 10-11, wherein the drive arm plate (520) comprises a fan blade securing portion (540) for securing one or more fan blades (502) to the fan disc (504) when the drive arm plate (520) is attached to the fan disc (504).

13. A fan disc apparatus as claimed in any preceding claim, wherein the fan disc (604) is formed of first (604a) and second (604b) fan disc portions, the first fan disc portion (604a) being formed integrally with the first drive arm (606), and the second fan disc portion (604b) being formed integrally with the second drive arm (608), and wherein the first drive arm (606) and first fan disc portion (604a) are formed integrally with a first hub sleeve (614) for connection to the fan drive shaft (612), and/or the second drive arm (608) and second fan disc portion (604b) are formed integrally with a second hub sleeve (624) for connection to the first hub sleeve (614) or the fan drive shaft (612).

14. A fan disc apparatus as claimed in any preceding claim, wherein the first (206, 206', 306, 306', 406, 406', 406", 506, 606) and second (208, 208', 308, 308', 408, 408', 408", 608) drive arms are rearward-facing drive arms, or wherein the first (706) and second (708) drive arms are forward-facing drive arms.

15. A gas turbine engine (10) comprising a fan drive shaft (212, 212', 312, 312', 412, 412', 412", 512, 612, 712) and a fan disc apparatus (200, 200', 300, 300', 400, 400', 400", 500, 600, 700) as claimed in any preceding claim.
